(19) **Europäisches Patentamt**

**European Patent Office**

**Office européen des brevets**

(11) **EP 4 716 312 A1**

(12) **EUROPEAN PATENT APPLICATION**
published in accordance with Art. 153(4) EPC

(43) Date of publication:
**25.03.2026 Bulletin 2026/13**

(21) Application number: **24822756.3**

(22) Date of filing: **13.06.2024**

(51) International Patent Classification (IPC):
**H04W 52/02** (2009.01)

(52) Cooperative Patent Classification (CPC):
**H04W 52/02**

(86) International application number:
**PCT/CN2024/099074**

(87) International publication number:
**WO 2024/255808 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.06.2023 CN 202310702619**

(71) Applicant: **Huawei Technologies Co., Ltd.
Shenzhen, Guangdong 518129 (CN)**

(72) Inventor: **WANG, Kang
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD, COMMUNICATION APPARATUS AND COMMUNICATION SYSTEM**

(57) This application provides a communication method, a communication apparatus, and a communication system. The method includes: A first device sends a first frame to a second device on a first bandwidth at a first time, where the first frame is used for time synchronization between the first device and the second device. The first device sends a second frame to the second device on a second bandwidth at a second time, where the second bandwidth is greater than the first bandwidth. The first device starts, at a third time, to receive a third frame from the second device, where the third frame is a response frame of the second frame, and a difference between the third time and the second time is determined based on a symbol length in the first frame. In the method, different types of bandwidths, such as the first bandwidth and the second bandwidth, are combined, so that a time during which wideband or ultra-wideband is used can be reduced, to reduce bandwidth occupation and reduce power consumption of the device. In addition, the method uses a unidirectional time synchronization method. In other words, the first frame is sent only once on the first bandwidth. This reduces interaction between systems and further reduces power consumption of the device.

FIG. 2

**Description**

CROSS-REFERENCE TO RELATED APPLICATIONS

This application claims priority to Chinese Patent Application No. 202310702619.6, filed with the China National Intellectual Property Administration on June 13, 2023 and entitled "COMMUNICATION METHOD, COMMUNICATION APPARATUS, AND COMMUNICATION SYSTEM", which is incorporated herein by reference in its entirety.

TECHNICAL FIELD

This application relates to the field of wireless communication technologies, and in particular, to a communication method, a communication apparatus, and a communication system.

BACKGROUND

An ultra-wideband (ultra-wideband, UWB) system uses a nanosecond (ns)-level pulse as a basic signal, and has a bandwidth of more than 100 megahertz in a spectrum, for example, a 2-ns pulse and a bandwidth of 500 megahertz (MHz). Therefore, the ultra-wideband system has features such as a wide bandwidth, a high transmission rate, and a large system capacity. In addition, the ultra-wideband system has low power spectral density, and can coexist with an existing communication system. Based on the foregoing features, the ultra-wideband system exhibits good performance, for example, good ranging performance, and can implement centimeter-level ranging.

However, the wide bandwidth occupied by the ultra-wideband system results in high power consumption of a device.

SUMMARY

Embodiments of this application provide a communication method, a communication apparatus, and a communication system, to reduce power consumption of a device.

According to a first aspect, an embodiment of this application provides a communication method. The method may be performed by a first device or a module (for example, a chip) used in the first device. An example in which the first device performs the method is used. The method includes: The first device sends a first frame to a second device on a first bandwidth at a first time, where the first frame is used for time synchronization between the first device and the second device. The first device sends a second frame to the second device on a second bandwidth at a second time, where the second bandwidth is greater than the first bandwidth. The first device starts, at a third time, to receive a third frame from the second device, where the third frame is a response frame of the second frame, and a difference between the third time and the second time is determined based on a symbol length in the first frame.

In the method, different types of bandwidths, such as the first bandwidth and the second bandwidth, are combined, so that a time during which wideband or ultra-wideband is used can be reduced, to reduce bandwidth occupation and reduce power consumption of the device. In addition, the method uses a unidirectional time synchronization method. In other words, the first frame is sent only once on the first bandwidth. This reduces interaction between systems and further reduces power consumption of the device.

In a possible implementation method, the third time is equal to the second time plus a*symbolLen plus $t_{pr}$, where a is a real number greater than 0 and less than or equal to 1, and is related to precision of a receiver of the first device, symbolLen is the symbol length in the first frame, and $t_{pr}$ is a predefined difference between a time for starting the receiver to receive the third frame and the second time.

The method is a fine synchronization method. In other words, a difference between the third time at which the first device starts the receiver to start to receive the third frame and a time at which the third frame is actually received is small. Therefore, the first device can receive the third frame soon after starting the receiver. This manner helps reduce on duration of the receiver, to reduce power consumption of the device.

In a possible implementation method, the method further includes: The first device receives the third frame from the second device on the second bandwidth at a fourth time. The first device determines a distance between the first device and the second device based on the second time and the fourth time.

The method can be used to measure the distance between the first device and the second device.

In a possible implementation method, the method further includes: The first device sends a fourth frame to the second device on the second bandwidth at a fifth time. That the first device determines the distance between the first device and the second device based on the second time and the fourth time includes: The first device determines the distance between the first device and the second device based on the second time, the fourth time, and the fifth time.

The method can be used to measure the distance between the first device and the second device.

In a possible implementation method, the method further includes: The first device establishes a connection to the second device on the first bandwidth and negotiates a ranging parameter with the second device on the first bandwidth, where the ranging parameter includes at least one of the following: Tinterval, DeltaT, or $t_{pr}$; Tinterval represents a difference between the second time and the first time; DeltaT represents a difference between the fifth time and the second time; and $t_{pr}$ is the predefined difference between the time for starting the receiver to receive the third frame and the second time.

In the method, the first device and the second device negotiate the ranging parameter on the first bandwidth. This helps accurately measure the distance between the first device and the second device.

In a possible implementation method, the first frame is further used to determine a clock offset ratio or a carrier frequency offset ratio between the second device and the first device.

According to a second aspect, an embodiment of this application provides a communication method. The method may be performed by a second device or a module (for example, a chip) used in the second device. An example in which the second device performs the method is used. The method includes: The second device receives a first frame from a first device on a first bandwidth at a sixth time, where the first frame is used for time synchronization between the first device and the second device. The second device receives a second frame from the first device on a second bandwidth at a seventh time, where the second bandwidth is greater than the first bandwidth. The second device sends a third frame to the first device on the second bandwidth at an eighth time, where the third frame is a response frame of the second frame.

In a possible implementation method, the method further includes: The second device determines a distance between the first device and the second device based on the seventh time and the eighth time.

In a possible implementation method, the method further includes: The second device receives a fourth frame from the first device on the second bandwidth at a ninth time.

That the second device determines the distance between the first device and the second device based on the seventh time and the eighth time includes: The second device determines the distance between the first device and the second device based on the seventh time, the eighth time, and the ninth time.

In a possible implementation method, the method further includes: The second device establishes a connection to the first device on the first bandwidth and negotiates a ranging parameter with the first device on the first bandwidth, where the ranging parameter includes at least one of the following: Tinterval, DeltaT, or $t_{pr}$; Tinterval is used to determine a time for starting to receive the second frame; DeltaT is used to determine a time for starting to receive the fourth frame; and $t_{pr}$ is used to determine a time for sending the third frame.

In a possible implementation method, the first frame is further used to determine a clock offset ratio or a carrier frequency offset ratio between the second device and the first device.

According to a third aspect, an embodiment of this application provides a communication apparatus. The apparatus may be a first device, or may be a module (for example, a chip) used in a first device. The apparatus has a function of implementing any implementation method of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a second device, or may be a module (for example, a chip) used in a second device. The apparatus has a function of implementing any implementation method of the second aspect. The function may be implemented by hardware, or may be implemented by hardware executing corresponding software. The hardware or the software includes one or more modules corresponding to the function.

According to a fifth aspect, an embodiment of this application provides a communication apparatus, including a processor coupled to a memory. The processor is configured to invoke a program stored in the memory, to perform any one of the implementation methods of the first aspect and the second aspect. The memory may be located inside the apparatus, or may be located outside the apparatus. In addition, there may be one or more processors.

According to a sixth aspect, an embodiment of this application provides a communication apparatus, including a processor and a memory. The memory is configured to store computer instructions. When the apparatus runs, the processor executes the computer instructions stored in the memory, to enable the apparatus to perform any one of the implementation methods of the first aspect and the second aspect.

According to a seventh aspect, an embodiment of this application provides a communication apparatus, including a unit or means (means) configured to perform steps of any one of the implementation methods of the first aspect and the second aspect.

According to an eighth aspect, an embodiment of this application provides a communication apparatus, including a processor and an interface circuit. The processor is configured to: communicate with another apparatus through the interface circuit, and perform any one of the implementation methods of the first aspect and the second aspect. There are one or more processors.

According to a ninth aspect, an embodiment of this application further provides a computer program product. The computer program product includes a computer program or instructions. When the computer program or the instructions are run by a communication apparatus, any one of the implementation methods of the first aspect and the second aspect is performed.

According to a tenth aspect, an embodiment of this application further provides a computer-readable storage medium. The computer-readable storage medium stores instructions. When the instructions are run on a communication apparatus, any one of the implementation methods of the first aspect and the second aspect is performed.

According to an eleventh aspect, an embodiment of this application further provides a chip system, including a processor, configured to perform any one of the implementation methods of the first aspect and the second aspect.

According to a twelfth aspect, an embodiment of this application further provides a communication system, including a first device configured to perform the method according to any one of the first aspect, and a second device configured to perform the method according to any one of the second aspect.

BRIEF DESCRIPTION OF DRAWINGS

FIG. 1 is a diagram of a communication system according to an embodiment of this application;

FIG. 2 is a schematic flowchart of a communication method according to an embodiment of this application;

FIG. 3 is a diagram of an example of a preamble code;

FIG. 4 is a diagram of a star network;

FIG. 5 is a diagram of a chip architecture according to an embodiment of this application;

FIG. 6 is a diagram of another chip architecture according to an embodiment of this application;

FIG. 7 is a diagram of still another chip architecture according to an embodiment of this application;

FIG. 8 is a diagram of a chip module framework according to an embodiment of this application;

FIG. 9 is a diagram of another chip module framework according to an embodiment of this application;

FIG. 10 is a diagram of still another chip module framework according to an embodiment of this application;

FIG. 11 is a diagram of a framework of a software static strategy according to an embodiment of this application;

FIG. 12 is a diagram of a framework of a packet traffic arbitration (PTA) strategy according to an embodiment of this application;

FIG. 13 is a schematic flowchart of link establishment according to an embodiment of this application;

FIG. 14 is a schematic flowchart of other link establishment according to an embodiment of this application;

FIG. 15 is a schematic flowchart of still other link establishment according to an embodiment of this application;

FIG. 16 is a schematic flowchart of still other link establishment according to an embodiment of this application;

FIG. 17 is a schematic flowchart of still other link establishment according to an embodiment of this application;

FIG. 18 is a schematic flowchart of still other link establishment according to an embodiment of this application;

FIG. 19 is a diagram of narrowband-assisted wideband according to an embodiment of this application;

FIG. 20 is a diagram of a structure of a communication apparatus according to an embodiment of this application; and

FIG. 21 is a diagram of a structure of a communication apparatus according to an embodiment of this application.

DESCRIPTION OF EMBODIMENTS

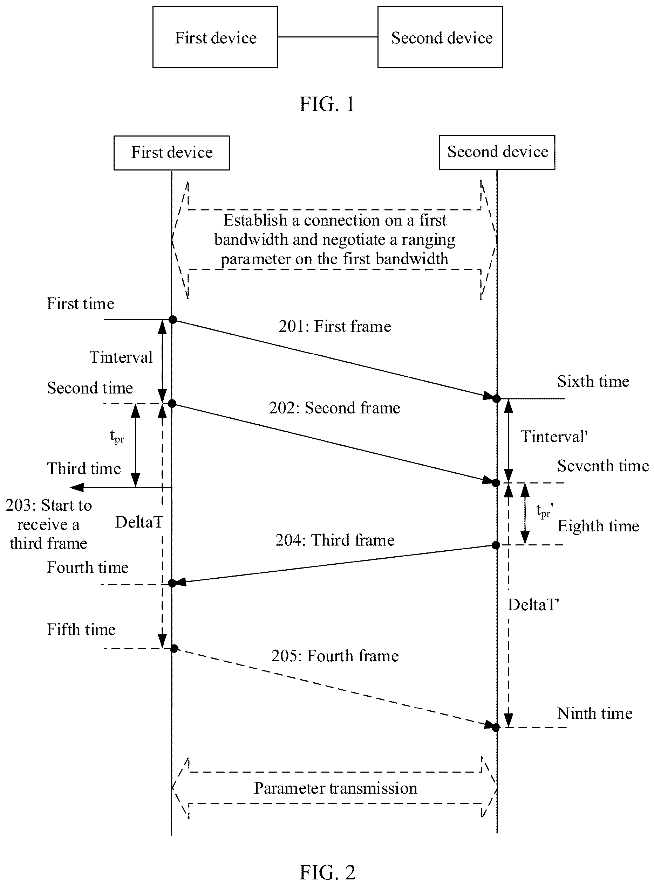

FIG. 1 is a diagram of a communication system according to an embodiment of this application. The communication system includes a first device and a second device, and the first device and the second device each may be any type of device. For example, the first device and the second device each may be any one of a terminal device or a network device. Certainly, the device may alternatively be another type of device, for example, a cloud server or a core network device. This is not limited in this application.

The terminal device is a device having a wireless transceiver function. The terminal device may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may be deployed on land, including indoors or outdoors. During specific application, the terminal device may be a cellular phone, a mobile phone (mobile phone), a tablet computer (pad), a wearable device, a smart point of sale (point of sale, POS) machine, customer-premises equipment (customer-premises equipment, CPE), a computer having a wireless transceiver function, a virtual reality (virtual reality, VR) terminal, an augmented reality (augmented reality, AR) terminal, a terminal device in industrial control (industrial control), a terminal device in self driving (self driving), a terminal device in telemedicine (remote medical), a terminal device in a smart grid (smart grid), a terminal device in a smart city (smart city), a terminal in a smart home (smart home), or the like.

The network device is an access device for the terminal device to access the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access point (access point, AP) device in a wireless fidelity (wireless fidelity, Wi-Fi) system, or the like. The access point device is a wireless hub (HUB) used for a wireless network, and is an access point for the terminal device to access a wired Ethernet backbone. The access point device can be easily installed on a ceiling or a wall, to provide large-scale signal coverage in open space. The network device may alternatively be a module or a unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of some or all physical layers. For specific descriptions of the foregoing protocol layers, refer to related technical specifications of the 3rd generation partnership project (3rd generation partnership project, 3GPP). The network device may be a macro base station, or may be a micro base station or an indoor base station, or may be a relay node, a donor node, or the like. A specific technology and a specific device form that are used by the network device are not limited in embodiments of this application.

FIG. 2 is a schematic flowchart of a communication method according to an embodiment of this application. The method includes the following steps.

Step 201: A first device sends a first frame to a second device on a first bandwidth at a first time. Correspondingly, the second device receives the first frame on the first bandwidth at a sixth time.

In other words, a sending time of the first frame is the first time, and a receiving time of the first frame is the sixth time.

The first frame is used for time synchronization between the first device and the second device, and the first frame is also referred to as a synchronization frame. For example, the first frame may be specifically a beacon (beacon) frame.

For example, the first frame includes synchronization information, and the synchronization information is used for time synchronization between the first device and the second device.

For example, the first frame is further used to determine a clock offset ratio or a carrier frequency offset (carrier frequency offset, CFO) ratio between the second device and the first device.

The clock offset ratio between the second device and the first device is as follows: $clock_{freq} = \frac{delta'}{delta}$ . delta represents a periodicity at which the first device sends a synchronization frame based on a clock count of the first device. In other words, one synchronization frame is sent at an interval of duration of delta. delta' represents a periodicity at which the second device receives a synchronization frame based on a clock count of the second device. In other words, one synchronization frame is received at an interval of duration of delta'.

The carrier clock offset ratio between the first device and the second device is as follows: $CFO = \frac{F1}{F2}$ . F1 represents a carrier frequency of the first device, and F2 represents a carrier frequency of the second device.

The clock offset ratio and the carrier frequency offset ratio are in a reciprocal relationship.

Step 202: The first device sends a second frame to the second device on a second bandwidth at a second time. Correspondingly, the second device receives the second frame on the second bandwidth at a seventh time.

The second bandwidth is greater than the first bandwidth, the second bandwidth is also referred to as wideband or a wideband system, and the first bandwidth is also referred to as narrowband or a narrowband system.

The second frame is also referred to as a poll frame or has another name. This is not limited in this application.

Step 203: The first device starts, at a third time, to receive a third frame from the second device, where the third frame is a response frame of the second frame.

The third frame is also referred to as a resp frame or has another name. This is not limited in this application.

In an implementation method, the third time is equal to the second time plus $t_{pr}$. This manner may be considered as coarse synchronization. In other words, a difference between the third time at which the first device starts a receiver to start to receive the third frame and a fourth time at which the third frame is actually received may be large, for example, greater than a first threshold. As a result, the first device starts the receiver a long time in advance.

In another implementation method, a difference between the third time and the second time is determined based on a symbol length in the first frame. In other words, the first device determines the third time based on the second time and the symbol length in the first frame. For example, the third time is equal to the second time plus $a*symbolLen$ plus $t_{pr}$. This manner may be considered as fine synchronization. In other words, the difference between the third time at which the first device starts the receiver to start to receive the third frame and the fourth time at which the third frame is actually received is small, for example, less than a second threshold. Therefore, the first device can receive the third frame soon after starting the receiver. This manner helps reduce on duration of the receiver, to reduce power consumption of the device.

a is a real number greater than 0 and less than or equal to 1, and is related to precision of the receiver of the first device. For example, a=1/2, 1/4, 1/8, or 1. symbolLen is the symbol length in the first frame. For example, symbolLen may be a symbol length corresponding to a preamble code (preamble code) carried in the first frame. $t_{pr}$ is a predefined difference between a time for starting the receiver to receive the third frame and the second time. In other words, $t_{pr}$ is a predefined value. When duration of $t_{pr}$ elapses after the second time, the first device starts the receiver to wait to receive the third frame.

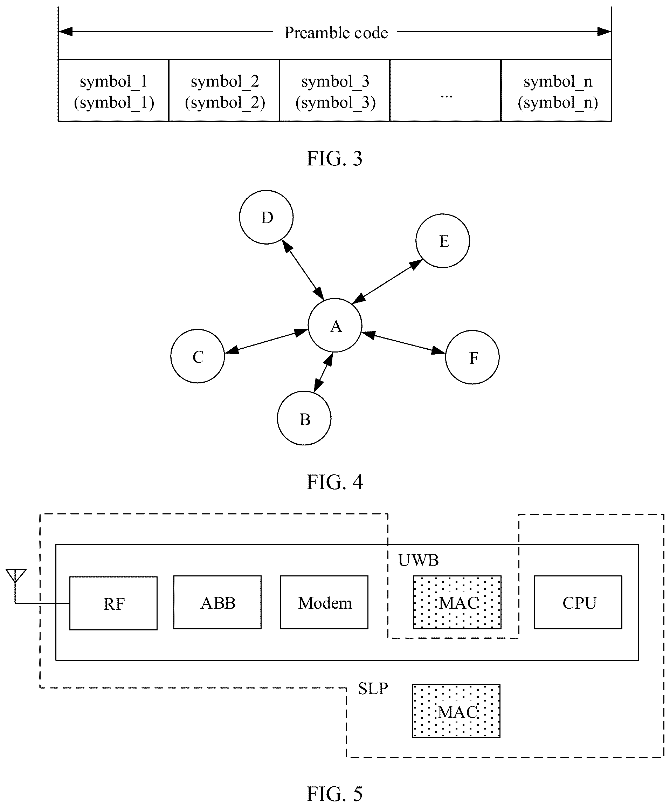

FIG. 3 is a diagram of an example of a preamble code. In this example, the preamble code occupies n symbol lengths (symbolLen), and lengths of n symbols in the figure are all symbolLen.

Step 204: The second device sends the third frame to the first device on the second bandwidth at an eighth time. Correspondingly, the first device receives the third frame on the second bandwidth at the fourth time.

In an implementation method, the first device may determine a distance between the first device and the second device based on the second time and the fourth time.

In an implementation method, the second device may determine the distance between the first device and the second device based on the seventh time and the eighth time.

For example, step 205 may be further performed.

Step 205: The first device sends a fourth frame to the second device on the second bandwidth at a fifth time. Correspondingly, the second device receives the fourth frame on the second bandwidth at a ninth time.

The fourth frame is also referred to as a finis frame or has another name. This is not limited in this application.

In an implementation method, the first device may determine the distance between the first device and the second device based on the second time, the fourth time, and the fifth time.

In an implementation method, the second device may determine the distance between the first device and the second device based on the seventh time, the eighth time, and the ninth time.

In an implementation method, parameter transmission may be performed between the first device and the second device on the first bandwidth. For example, the first device sends the second time, the fourth time, and the fifth time to the second device, and in this case, the second device determines the distance between the first device and the second device based on the second time, the fourth time, the fifth time, the seventh time, the eighth time, and the ninth time. Alternatively, the second device sends the seventh time, the eighth time, and the ninth time to the first device, and in this case, the first device determines the distance between the first device and the second device based on the second time, the fourth time, the fifth time, the seventh time, the eighth time, and the ninth time.

For example, distance=c*TOF, where distance represents the distance between the first device and the second device, c represents a speed of light, TOF=A/B, A=(fourth time-second time)*(ninth time-eighth time)-(eighth time-seventh time)*(fifth time-fourth time), and B=fifth time-second time+ninth time-seventh time. TOF is an abbreviation for time of flight (time of flight).

In an implementation method, before step 201, the first device and the second device establish a connection and negotiate a ranging parameter on the first bandwidth. Alternatively, the ranging parameter may be predefined in a protocol or preconfigured on the first device and the second device. The ranging parameter includes at least one of the following: Tinterval, DeltaT, or $t_{pr}$. Optionally, the ranging parameter further includes at least one of the following: a channel frequency band used by the second bandwidth, a preamble code, a time length of a preamble code (preamble length), or a start-of-frame delimiter (start-of-frame delimiter, SFD).

Tinterval represents a difference between the second time and the first time. The first device may determine the second time based on the first time and Tinterval. In other words, the second time is equal to the first time plus Tinterval. The first device sends the second frame at the second time.

Tinterval may be further used by the second device to determine a time for starting to receive the second frame. Specifically, the second device determines Tinterval' based on Tinterval. When duration of Tinterval' elapses after the sixth time, the second device starts a receiver, prepares to start to receive the second frame, and receives the second frame at the seventh time.

$$\text{Tinterval}' = \text{Tinterval} * \text{CFO, or } \text{Tinterval}' = \frac{\text{Tinterval}}{clock_{freq}}.$$

$t_{pr}$ is the predefined difference between the time at which the first device starts the receiver to receive the third frame and the second time. The first device determines the third time based on the second time and $t_{pr}$, where the third time is equal to the second time plus a*symbolLen plus $t_{pr}$, or the third time is equal to the second time plus $t_{pr}$. Then, the first device starts the receiver at the third time, prepares to start to receive the third frame, and receives the third frame at the fourth time.

tpr may be further used by the second device to determine a time for sending the third frame. Specifically, the second device determines tpr' based on tpr. When duration of tpr' elapses after the seventh time, the eighth time arrives, and the second device sends the third frame at the eighth time.

$$t_{pr}' = t_{pr} * CFO, \text{ or } t_{pr}' = \frac{t_{pr}}{clock_{freq}}.$$

DeltaT represents a difference between the fifth time and the second time. The first device may determine the fifth time based on the second time and DeltaT. In other words, the fifth time is equal to the second time plus DeltaT. The first device sends the fourth frame at the fifth time.

DeltaT may be further used by the second device to determine a time for starting to receive the fourth frame. Specifically, the second device determines DeltaT' based on DeltaT. When duration of DeltaT' elapses after the seventh time, the second device starts the receiver, prepares to start to receive the fourth frame, and receives the fourth frame at the ninth time.

$$DeltaT' = DeltaT * CFO, \text{ or } DeltaT' = \frac{DeltaT}{clock_{freq}}.$$

In the foregoing solution, a distance between devices is measured by combining different types of bandwidths, so that a time during which wideband or ultra-wideband is used can be reduced, to reduce bandwidth occupation and reduce power consumption of the device.

It should be noted that, an application scenario to which the foregoing method embodiment is applicable is not limited in this application. In an implementation method, the foregoing method embodiment may be applied to a star network shown in FIG. 4. The network includes at least one primary control device (also referred to as a coordination device or a management device) and at least one secondary device (also referred to as a common device). Based on the star network, the first device may be a primary control device, and the second device may be a secondary device.

For example, solutions provided in embodiments of this application are applicable to SparkLink positioning (SparkLink position, SLP). In embodiments of this application, Bluetooth (Bluetooth, BT) and Bluetooth low energy (Bluetooth low energy, BLE) may refer to each other. SparkLink (SparkLink or NearLink) includes at least one of the following: SparkLink low energy (SparkLink low energy, SLE), SparkLink basic (SparkLink basic, SLB), or SparkLink positioning (SparkLink position, SLP). Therefore, the first communication apparatus may be a G node in a SparkLink system, and the second communication apparatus may be a T node in the SparkLink system.

Both the IEEE and the SparkLink have ultra-wideband technologies. For differentiation, in this application, an ultra-wideband technology specified in the IEEE 802.15.4 is briefly referred to as UWB (ultra-wideband), and an ultra-wideband technology specified in the SparkLink is briefly referred to as SLP (SparkLink position).

In the ultra-wideband technology, ranging can be performed through ultra-wideband receiving and sending, including one-to-one distance measurement or angle measurement, one-to-many distance measurement or angle measurement, and the like. The ultra-wideband technology is mainly applied to application scenarios such as mobile phones, wearables, and head units.

The following describes some embodiments of the solutions provided in this application.

Embodiment 1

Some modules of UWB and SLP may be reused, to reduce costs, an area, and power consumption of a chip. Chip resources may be highly reused, allowing for rapid iteration of a plurality of chips.

UWB and SLP may share a radio frequency architecture and channel. FIG. 5 is a diagram of a chip architecture according to an embodiment of this application. It can be learned from FIG. 5 that, through design, resources of a central processing unit (central processing unit, CPU), a radio frequency (radio frequency, RF) unit, an analog baseband (analog baseband, ABB) unit, or a modem (Modem) may be shared, and some modules at a media access control (media access control, MAC) layer may be reused, to reduce an area, costs, and power consumption of a chip.

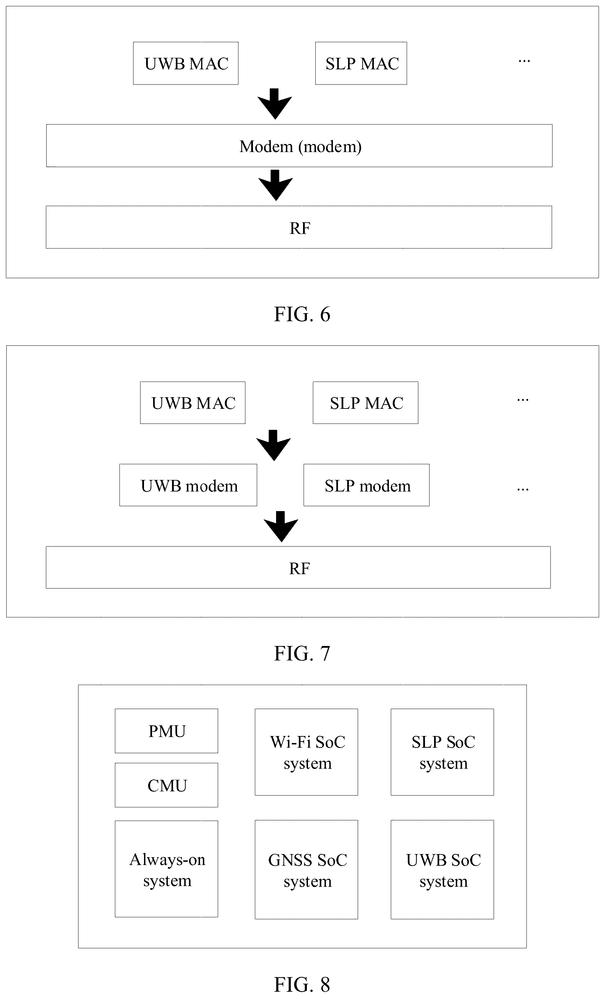

FIG. 6 is a diagram of another chip architecture according to an embodiment of this application. It can be learned from FIG. 6 that, MAC units of UWB and SLP are separately implemented, and the modes share an RF unit and a modem unit.

FIG. 7 is a diagram of still another chip architecture according to an embodiment of this application. It can be learned from FIG. 7 that, MAC units of UWB and SLP are separately implemented, modems of UWB and SLP are also separately implemented, and the modes share an RF unit.

Embodiment 2

An SLP chip may use a 14/28/40-nm process, may be packaged by using a chip scale package (chip size package, CSP), a ball grid array (ball grid array, BGA), a quad flat no-lead (quad flat no-lead, QFN) package, or the like, and may use a built-in flash memory (flash memory) or an external flash memory. According to an application scenario, at least one of the following subsystems may be selected and placed on one chip: a power management unit (power management unit, PMU), a clock management unit (clock management unit, CMU), an active optical network (active optical network, AON), a wireless local area network (wireless local area network, WLAN), UWB, SLP, a global navigation satellite system (global navigation satellite system, GNSS), an application (application, APP), audio (audio), or the like, to minimize an area, maximize functions, and improve performance and reliability.

This embodiment of this application provides a chip design manner. SLP and another subsystem are integrated into one chip. Subsystems of a chip may be tailored and combined based on different products. Different subsystems are connected through a bus.

FIG. 8 is a diagram of a chip module framework according to an embodiment of this application. It can be learned from FIG. 8 that, for a product that needs a functional module such as Wi-Fi or GNSS and has both UWB and SLP, UWB and SLP may be separated into different systems, and then combined with a Wi-Fi system, a GNSS system, an always-on system (Always-On System), a PMU, a CMU, a flash memory, and the like on one chip. Different subsystems are connected through a bus.

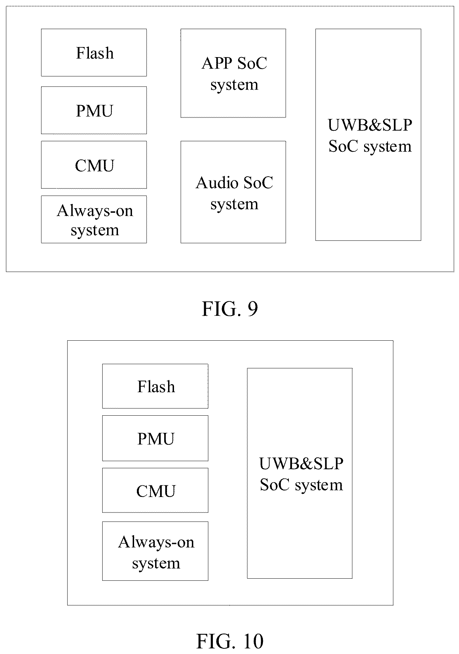

FIG. 9 is a diagram of another chip module framework according to an embodiment of this application. It can be learned from FIG. 9 that, for a terminal-side device that does not need a functional module such as Wi-Fi or GNSS but needs an audio function, to reduce an area and costs, UWB and SLP may be combined on one subsystem, and then combined with an APP system, an audio system, an always-on system, a PMU, a CMU, a flash, and the like on one chip. Different subsystems are connected through a bus.

FIG. 10 is a diagram of still another chip module framework according to an embodiment of this application. It can be learned from FIG. 10 that, for a terminal-side device that does not need a functional module such as Wi-Fi or GNSS and does not need an audio function, to reduce an area and costs, UWB and SLP may be combined on one subsystem, and then combined with an always-on system, a CMU, a PMU, a flash, and the like on one chip. Different subsystems are connected through a bus.

Embodiment 3

SLP and UWB in a same core may allocate service slots through software scheduling. SLP and UWB in different cores lack unified scheduling.

This embodiment of this application provides an SLP/UWB coexistence solution. According to whether SLP and UWB share an antenna, coexistence scenarios are classified into different-antenna coexistence (different antennas are used) and shared-antenna coexistence (a same antenna is used), and different coexistence strategies are provided.

In different-antenna coexistence, if SLP and UWB coexist, it can be ensured that receiving and sending frequencies of SLP are different from those of UWB (namely, frequency division multiplexing). Software may perform processing from a frequency hopping sequence (namely, code division multiplexing), a service periodicity, and an interval (namely, time division multiplexing).

If shared-antenna coexistence is used, a software static strategy or a packet traffic arbitration (packet traffic arbitration, PTA) strategy may be used. The software static strategy has advantages of a small hardware requirement, a small software modification amount, and the absence of dynamic radio frequency (radio frequency, RF) switching (for example, an operation such as RF recovery). The PTA strategy has advantages of faster service status switching and a smaller switching time granularity.

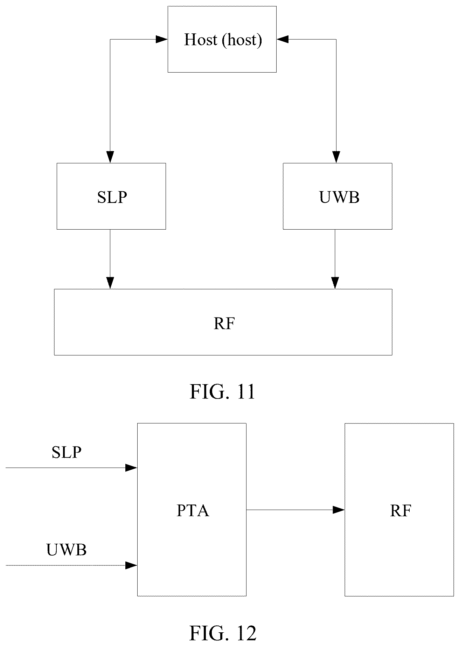

An example in which SLP and UWB coexist is used. FIG. 11 is a diagram of a framework of a software static strategy according to an embodiment of this application. It can be learned from FIG. 11 that, the software static strategy may include: After SLP is started, a host (HOST) is configured by using software to prompt UWB to exit a current radio frequency channel. In this scenario, UWB may check an SLP start flag, and the software may set UWB to switch from the current radio frequency channel to another radio frequency channel. A chip needs to support software setting switching.

For example, FIG. 12 is a diagram of a framework of a packet traffic arbitration (PTA) strategy according to an embodiment of this application. It can be learned from FIG. 12 that, the packet traffic arbitration (PTA) strategy includes: Time division is performed on any combination of transmitting (TX) and receiving (RX) of each party, a PTA module separately transmits occupation of a radio frequency channel to each party, different level signals are used to indicate that the radio frequency channel is occupied by SLP/UWB, and the signals are used to prompt software or hardware to perform corresponding processing. Different PTA priorities may be set for different services, and a service with a higher priority may preempt an air interface resource.

Embodiment 4

A SparkLink standard defines asynchronous and synchronous data links. Asynchronous links are classified into asynchronous unicast and multicast links, and synchronous links are classified into synchronous unicast, multicast, and broadcast links. In this embodiment of this application, a set of SLP link selection solutions is designed based on different requirements on real-time performance of different product data. Different data links may be used based on connections between different devices in different scenarios, to support requirements of different product application scenarios.

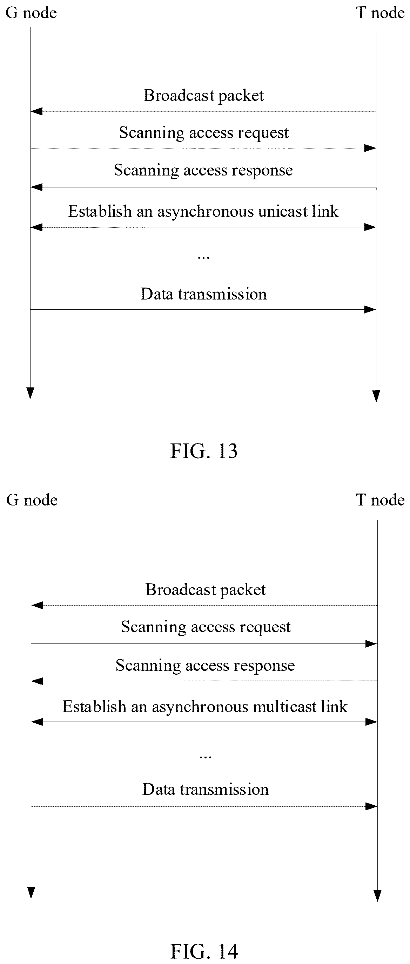

FIG. 13 is a schematic flowchart of link establishment according to an embodiment of this application. As shown in FIG. 13, after a T node sends a broadcast packet to a G node, the G node sends a scanning access request to the T node. Further, after the T node sends a scanning access response to the G node, an asynchronous unicast link is established between the G node and the T node, and data transmission is performed through the established asynchronous unicast link.

FIG. 14 is a schematic flowchart of other link establishment according to an embodiment of this application. As shown in FIG. 14, after a T node sends a broadcast packet to a G node, the G node sends a scanning access request to the T node. Further, after the T node sends a scanning access response to the G node, an asynchronous multicast link is established between the G node and the T node, and data transmission is performed through the established asynchronous multicast link.

For a product (for example, a non-audio device such as a keyboard, a mouse, or a stylus) or a service that has no requirement on real-time performance of data (that is, a delay requirement (or a service delay) of the product or the service is greater than a first value), the asynchronous unicast link shown in FIG. 13 or the asynchronous multicast link shown in FIG. 14 may be established for data transmission.

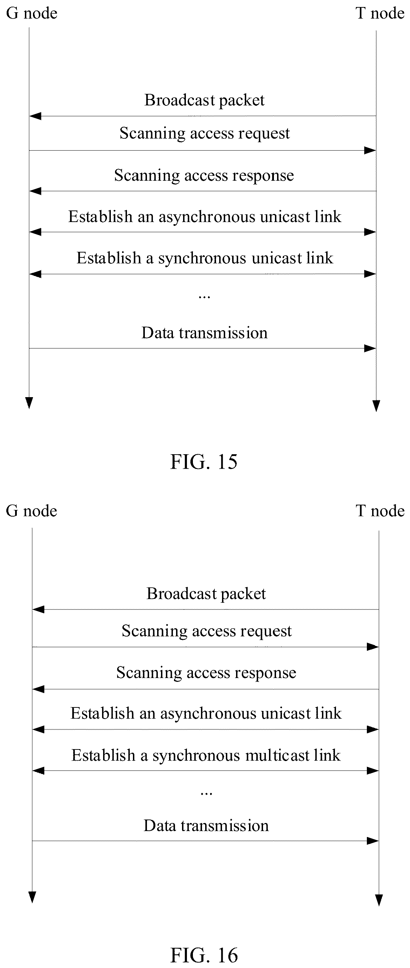

FIG. 15 is a schematic flowchart of still other link establishment according to an embodiment of this application. As shown in FIG. 15, after a T node sends a broadcast packet to a G node, the G node sends a scanning access request to the T node. Further, after the T node sends a scanning access response to the G node, an asynchronous unicast link is first established and then a synchronous unicast link is established between the G node and the T node, and data transmission is performed through the established synchronous unicast link.

FIG. 16 is a schematic flowchart of still other link establishment according to an embodiment of this application. As shown in FIG. 16, after a T node sends a broadcast packet to a G node, the G node sends a scanning access request to the T node. Further, after the T node sends a scanning access response to the G node, an asynchronous unicast link is first established and then a synchronous multicast link is established between the G node and the T node, and data transmission is performed through the established synchronous multicast link.

For a product (for example, an audio device such as earphones or a microphone) or a service that has a requirement on real-time performance of data (that is, a delay requirement of the product or the service is less than a second value), as shown in FIG. 15 or FIG. 16, the asynchronous unicast link may be first established, and then the synchronous unicast link or the synchronous multicast link may be established for data transmission.

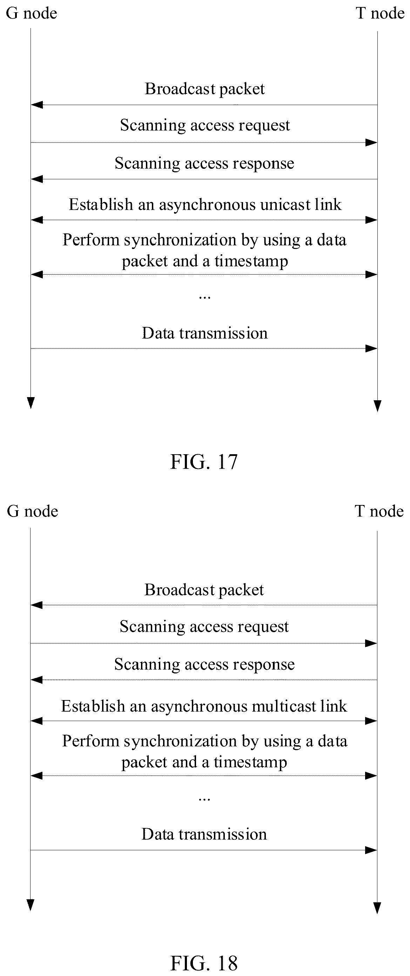

FIG. 17 is a schematic flowchart of still other link establishment according to an embodiment of this application. As shown in FIG. 17, after a T node sends a broadcast packet to a G node, the G node sends a scanning access request to the T node. Further, after the T node sends a scanning access response to the G node, an asynchronous unicast link is established between the G node and the T node, and data transmission is performed after synchronization is implemented by using a data packet and a timestamp.

FIG. 18 is a schematic flowchart of still other link establishment according to an embodiment of this application. As shown in FIG. 18, after a T node sends a broadcast packet to a G node, the G node sends a scanning access request to the T node. Further, after the T node sends a scanning access response to the G node, an asynchronous multicast link is established between the G node and the T node, and data transmission is performed after synchronization is implemented by using a data packet and a timestamp.

For a product (for example, an audio device such as a headset or a live microphone) or a service that has a requirement on real-time performance of data but does not have an extremely high requirement on real-time performance (that is, a delay requirement of the product or the service is less than the first value and greater than the second value), an asynchronous unicast link or an asynchronous multicast link may also be established, and synchronization is implemented by using a data packet and a timestamp.

Embodiment 5

The following is an application example of narrowband-assisted wideband according to an embodiment of this application.

Due to problems such as high costs, high complexity, and high power consumption of a current UWB chip, how to reduce costs, complexity, and power consumption is one of technical problems to be resolved in embodiments of this application.

This embodiment of this application provides a wideband chip. The wideband chip is connected to a narrowband chip through an interface. The wideband chip may include at least one of a UWB chip and an SLP chip. The narrowband chip may include at least one of a Bluetooth chip, a Wi-Fi chip, an SLE chip, or an SLB chip.

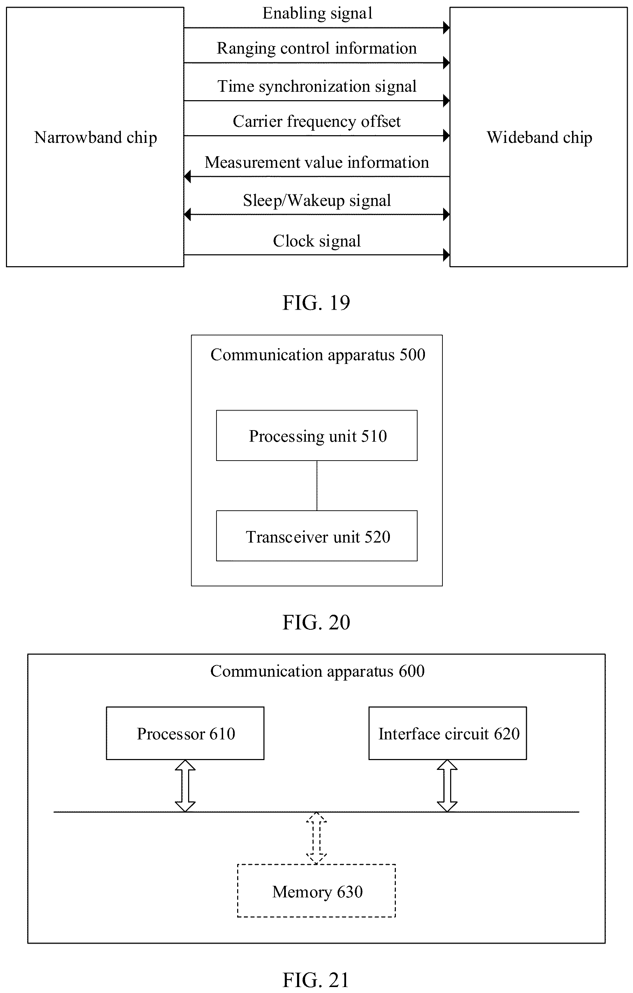

As shown in FIG. 19, there may be an interface between a narrowband chip and a wideband chip, for example, a general-purpose input/output (general-purpose input/output, GPIO) interface or a universal asynchronous receiver/-transmitter (universal asynchronous receiver/transmitter, UART) interface. When the wideband chip is required to work, the narrowband chip may send an enabling signal to the wideband chip. In this way, the wideband chip can be powered on and start to work. In a low power consumption scenario, the narrowband chip may further complete, through the interface (for example, the GPIO interface or the UART interface) between the narrowband chip and the wideband chip, a function of making the wideband chip sleep, waking up the wideband chip, or the like; or the wideband chip may complete, through the interface (for example, the GPIO interface or the UART interface) between the wideband chip and the narrowband chip, a function of making the narrowband chip sleep, waking up the narrowband chip, or the like.

In addition, the narrowband chip may send ranging control information to the wideband chip. For example, negotiation between systems is first performed (for example, narrowband chips of a receiving device and a sending device first complete network establishment and ranging control negotiation), then the narrowband chip sends ranging control information to a wideband chip through a communication interface between the chips, and the wideband chip starts ranging. In an implementation, a ranging process of the wideband chip may be completed in a double-sided two-way ranging (double-sided two-way ranging, DS-TWR) manner.

In an implementation, the narrowband chips of the receiving device and the sending device (for example, a G node and a T node) first perform signal time synchronization (which may be coarse synchronization). After the synchronization between the narrowband chips of the receiving device and the sending device is implemented, the narrowband chip of the sending device may send a time synchronization signal (synchronization, SYNC) to a wideband chip of the sending device, so that the wideband chip of the sending device and a wideband chip of the receiving device perform time synchronization (which may be fine synchronization), and/or the narrowband chip of the receiving device may send a time synchronization signal to the wideband chip of the receiving device, so that the wideband chip of the receiving device and the wideband chip of the sending device perform time synchronization. In this manner, the coarse synchronization between the receiving device and the sending device may be first implemented by using the narrowband chips, and then the fine synchronization between the receiving device and the sending device may be implemented by using the wideband chips. This can better implement receiving and sending synchronization, and can reduce costs of the wideband chip.

In an implementation, after sending the time synchronization signal to the wideband chip, the narrowband chip may send a carrier frequency offset (carrier frequency offset, CFO) to the wideband chip through an interface.

In an implementation, a wideband chip of a device may send measurement value information through a narrowband chip of the device to a peer device. For example, the wideband chip of the sending device may first send measurement value information to the narrowband chip of the sending device through an interface, then the narrowband chip of the sending device sends the measurement value information to the narrowband chip of the receiving device, and the narrowband chip of the receiving device sends the measurement value information to the wideband chip of the receiving device. The measurement value information may be information used to calculate a time of flight (time of flight, TOF). The measurement value information may alternatively be a time window for ranging.

In an implementation, the narrowband chip may provide a crystal oscillator (crystal oscillator, XO) signal to the wideband chip, and the XO signal may be used as a clock signal of the wideband chip.

Solutions in at least one embodiment in FIG. 1 to FIG. 19 in this application may be combined with each other. In other words, a device or a chip has or meets the solutions in the at least one embodiment in FIG. 1 to FIG. 19.

According to the technical solution of the wideband chip designed in the foregoing embodiment, normal working of the wideband chip is ensured through interaction and design of an interface between the narrowband chip and the wideband chip. A function of the narrowband chip is used in communication, and a function of the wideband chip is directly used in ranging, so that an ultra-wideband application can be used on demand, and a capability of the narrowband chip is used in data transmission, to achieve technical effects of low complexity, low power consumption, and the like.

The foregoing embodiments of this application are applicable to measurement of a distance between two devices, and also applicable to simultaneous measurement of distances between a plurality of devices, for example, simultaneous measurement of a distance between a first device and a second device and a distance between the first device and a third device.

It may be understood that, to implement functions in the foregoing embodiment (at least one embodiment in FIG. 1 to FIG. 19), the first device or the second device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on particular application scenarios and design constraints of the technical solutions.

FIG. 20 and FIG. 21 are diagrams of possible structures of communication apparatuses according to embodiments of this application. These communication apparatuses may be configured to implement functions of the device in the foregoing embodiments, and therefore can also implement beneficial effects of the foregoing method embodiments. In embodiments of this application, the communication apparatus may be a first device or a second device, or may be a module (for example, a chip) used in a first device or a second device.

The communication apparatus 500 shown in FIG. 20 includes a processing unit 510 and a transceiver unit 520. The communication apparatus 500 is configured to implement functions of the first device or the second device in the foregoing method embodiments.

When the communication apparatus 500 is configured to implement functions of the first device in the foregoing method embodiments, the processing unit 510 is configured to control the transceiver unit 520 to: send a first frame to a second device on a first bandwidth at a first time, where the first frame is used for time synchronization between the first device and the second device; send a second frame to the second device on a second bandwidth at a second time, where the second bandwidth is greater than the first bandwidth; and start, at a third time, to receive a third frame from the second device, where the third frame is a response frame of the second frame, and a difference between the third time and the second time is determined based on a symbol length in the first frame.

In a possible implementation method, the processing unit 510 is further configured to: control the transceiver unit 520 to receive the third frame from the second device on the second bandwidth at a fourth time; and determine a distance between the first device and the second device based on the second time and the fourth time.

In a possible implementation method, the processing unit 510 is further configured to control the transceiver unit 520 and the first device to send a fourth frame to the second device on the second bandwidth at a fifth time. That the processing unit 510 is configured to determine the distance between the first device and the second device based on the second time and the fourth time specifically includes: The processing unit 510 is configured to determine the distance between the first device and the second device based on the second time, the fourth time, and the fifth time.

In a possible implementation method, the processing unit 510 is further configured to: establish a connection to the second device on the first bandwidth and negotiate a ranging parameter with the second device on the first bandwidth, where the ranging parameter includes at least one of the following: Tinterval, DeltaT, or $t_{pr}$; Tinterval represents a difference between the second time and the first time; DeltaT represents a difference between the fifth time and the second time; and $t_{pr}$ is a predefined difference between a time for starting a receiver to receive the third frame and the second time.

When the communication apparatus 500 is configured to implement functions of the second device in the foregoing method embodiments, the processing unit 510 is configured to control the transceiver unit 520 to: receive a first frame from a first device on a first bandwidth at a sixth time, where the first frame is used for time synchronization between the first device and the second device; receive a second frame from the first device on a second bandwidth at a seventh time, where the second bandwidth is greater than the first bandwidth; and send a third frame to the first device on the second bandwidth at an eighth time, where the third frame is a response frame of the second frame.

In a possible implementation method, the processing unit 510 is further configured to determine a distance between the first device and the second device based on the seventh time and the eighth time.

In a possible implementation method, the processing unit 510 is further configured to control the transceiver unit 520 to receive a fourth frame from the first device on the second bandwidth at a ninth time. That the processing unit 510 is configured to determine the distance between the first device and the second device based on the seventh time and the eighth time specifically includes: The processing unit 510 is configured to determine the distance between the first device and the second device based on the seventh time, the eighth time, and the ninth time.

In a possible implementation method, the processing unit 510 is further configured to: establish a connection to the first device on the first bandwidth and negotiate a ranging parameter with the first device on the first bandwidth, where the ranging parameter includes at least one of the following: Tinterval, DeltaT, or $t_{pr}$; Tinterval is used to determine a time for starting to receive the second frame; DeltaT is used to determine a time for starting to receive the fourth frame; and $t_{pr}$ is used to determine a time for sending the third frame.

For more detailed descriptions of the processing unit 510 and the transceiver unit 520, directly refer to related descriptions of the foregoing method embodiments. Details are not described herein again.

The communication apparatus 600 shown in FIG. 21 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to store instructions executed by the processor 610, store input data required for the processor 610 to run instructions, or store data generated after the processor 610 runs instructions.

When the communication apparatus 600 is configured to implement the foregoing method embodiments, the processor 610 is configured to implement a function of the foregoing processing unit 510, and the interface circuit 620 is configured to implement a function of the foregoing transceiver unit 520.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a first device or a second device. Certainly, the processor and the storage medium may exist in a first device or a second device as discrete components.

All or some of the foregoing embodiments may be implemented by using software, hardware, firmware, or any combination thereof. When software is used to implement embodiments, all or some of the embodiments may be implemented in a form of computer program product. The computer program product includes one or more computer programs or instructions. The computer program (English: Computer Program) is a set of instructions that indicate each step of an electronic computer or another device having a message processing capability, is usually written in a program design language, and is run in a target system structure. When the computer programs or instructions are loaded and executed on a computer, all or some of the procedures or functions in embodiments of this application are performed. The computer may be a general-purpose computer, a dedicated computer, a computer network, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between associated objects. In a formula in this application, the character "/" indicates a "division" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.  A communication method, comprising:

    sending, by a first device, a first frame to a second device on a first bandwidth at a first time, wherein the first frame is used for time synchronization between the first device and the second device;
    sending, by the first device, a second frame to the second device on a second bandwidth at a second time, wherein the second bandwidth is greater than the first bandwidth; and
    starting, by the first device at a third time, to receive a third frame from the second device, wherein the third frame is a response frame of the second frame, and a difference between the third time and the second time is determined based on a symbol length in the first frame.

2. The method according to claim 1, wherein the third time is equal to the second time plus a*symbolLen plus tpr; and a is a real number greater than 0 and less than or equal to 1, and is related to precision of a receiver of the first device, symbolLen is the symbol length in the first frame, and tpr is a predefined difference between a time for starting the receiver to receive the third frame and the second time.

3. The method according to claim 1 or 2, wherein the method further comprises:

   receiving, by the first device, the third frame from the second device on the second bandwidth at a fourth time; and
   determining, by the first device, a distance between the first device and the second device based on the second time and the fourth time.

4. The method according to claim 3, wherein the method further comprises:

   sending, by the first device, a fourth frame to the second device on the second bandwidth at a fifth time; and
   determining, by the first device, the distance between the first device and the second device based on the second time and the fourth time comprises:
   determining, by the first device, the distance between the first device and the second device based on the second time, the fourth time, and the fifth time.

5. The method according to claim 4, wherein the method further comprises:

   establishing, by the first device, a connection to the second device on the first bandwidth and negotiating a ranging parameter with the second device on the first bandwidth, wherein the ranging parameter comprises at least one of the following: Tinterval, DeltaT, or tpr;
   Tinterval represents a difference between the second time and the first time;
   DeltaT represents a difference between the fifth time and the second time; and
   tpr is the predefined difference between the time for starting the receiver to receive the third frame and the second time.

6. The method according to any one of claims 1 to 5, wherein the first frame is further used to determine a clock offset ratio or a carrier frequency offset ratio between the second device and the first device.

7. A communication method, comprising:

   receiving, by a second device, a first frame from a first device on a first bandwidth at a sixth time, wherein the first frame is used for time synchronization between the first device and the second device;
   receiving, by the second device, a second frame from the first device on a second bandwidth at a seventh time, wherein the second bandwidth is greater than the first bandwidth; and
   sending, by the second device, a third frame to the first device on the second bandwidth at an eighth time, wherein the third frame is a response frame of the second frame.

8. The method according to claim 7, wherein the method further comprises:

   determining, by the second device, a distance between the first device and the second device based on the seventh time and the eighth time.

9. The method according to claim 8, wherein the method further comprises:

   receiving, by the second device, a fourth frame from the first device on the second bandwidth at a ninth time; and
   determining, by the second device, the distance between the first device and the second device based on the seventh time and the eighth time comprises:
   determining, by the second device, the distance between the first device and the second device based on the seventh time, the eighth time, and the ninth time.

10. The method according to claim 9, wherein the method further comprises:

establishing, by the second device, a connection to the first device on the first bandwidth and negotiating a ranging parameter with the first device on the first bandwidth, wherein the ranging parameter comprises at least one of the following: Tinterval, DeltaT, or tpr;

Tinterval is used to determine a time for starting to receive the second frame;

DeltaT is used to determine a time for starting to receive the fourth frame; and

tpr is used to determine a time for sending the third frame.

11. The method according to any one of claims 7 to 10, wherein the first frame is further used to determine a clock offset ratio or a carrier frequency offset ratio between the second device and the first device.

12. A communication apparatus, comprising a processing unit and a transceiver unit, wherein the processing unit is configured to control the transceiver unit to:

send a first frame to a second device on a first bandwidth at a first time, wherein the first frame is used for time synchronization between a first device and the second device;

send a second frame to the second device on a second bandwidth at a second time, wherein the second bandwidth is greater than the first bandwidth; and

start, at a third time, to receive a third frame from the second device, wherein the third frame is a response frame of the second frame, and a difference between the third time and the second time is determined based on a symbol length in the first frame.

13. The apparatus according to claim 12, wherein the third time is equal to the second time plus a*symbolLen plus tpr; and a is a real number greater than 0 and less than or equal to 1, and is related to precision of a receiver of the first device, symbolLen is the symbol length in the first frame, and tpr is a predefined difference between a time for starting the receiver to receive the third frame and the second time.

14. The apparatus according to claim 12 or 13, wherein the processing unit is further configured to: control the transceiver unit to receive the third frame from the second device on the second bandwidth at a fourth time; and determine a distance between the first device and the second device based on the second time and the fourth time.

15. The apparatus according to claim 14, wherein the processing unit is further configured to control the transceiver unit and the first device to send a fourth frame to the second device on the second bandwidth at a fifth time; and that the processing unit is configured to determine the distance between the first device and the second device based on the second time and the fourth time specifically comprises: the processing unit is configured to determine the distance between the first device and the second device based on the second time, the fourth time, and the fifth time.

16. The apparatus according to claim 15, wherein the processing unit is further configured to: establish a connection to the second device on the first bandwidth and negotiate a ranging parameter with the second device on the first bandwidth, wherein the ranging parameter comprises at least one of the following: Tinterval, DeltaT, or tpr;

Tinterval represents a difference between the second time and the first time;

DeltaT represents a difference between the fifth time and the second time; and

tpr is the predefined difference between the time for starting the receiver to receive the third frame and the second time.

17. The apparatus according to any one of claims 12 to 16, wherein the first frame is further used to determine a clock offset ratio or a carrier frequency offset ratio between the second device and the first device.

18. A communication apparatus, comprising a processing unit and a transceiver unit, wherein the processing unit is configured to control the transceiver unit to:

receive a first frame from a first device on a first bandwidth at a sixth time, wherein the first frame is used for time synchronization between the first device and a second device;

receive a second frame from the first device on a second bandwidth at a seventh time, wherein the second bandwidth is greater than the first bandwidth; and

send a third frame to the first device on the second bandwidth at an eighth time, wherein the third frame is a response frame of the second frame.

19. The apparatus according to claim 18, wherein the processing unit is further configured to determine a distance between the first device and the second device based on the seventh time and the eighth time.

20. The apparatus according to claim 19, wherein the processing unit is further configured to control the transceiver unit to receive a fourth frame from the first device on the second bandwidth at a ninth time; and
that the processing unit is configured to determine the distance between the first device and the second device based on the seventh time and the eighth time specifically comprises: the processing unit is configured to determine the distance between the first device and the second device based on the seventh time, the eighth time, and the ninth time.

21. The apparatus according to claim 20, wherein the processing unit is further configured to: establish a connection to the first device on the first bandwidth and negotiate a ranging parameter with the first device on the first bandwidth, wherein the ranging parameter comprises at least one of the following: Tinterval, DeltaT, or tpr;

Tinterval is used to determine a time for starting to receive the second frame;
DeltaT is used to determine a time for starting to receive the fourth frame; and
tpr is used to determine a time for sending the third frame.

22. The apparatus according to any one of claims 18 to 21, wherein the first frame is further used to determine a clock offset ratio or a carrier frequency offset ratio between the second device and the first device.

23. A communication apparatus, comprising a processor and an interface circuit, wherein the processor is configured to: communicate with another apparatus through the interface circuit, and perform the method according to any one of claims 1 to 6, or perform the method according to any one of claims 7 to 11.

24. A communication apparatus, comprising a processor coupled to a memory, wherein the processor is configured to invoke a program stored in the memory, to perform the method according to any one of claims 1 to 6, or perform the method according to any one of claims 7 to 11.

25. A communication apparatus, comprising a processor and a memory, wherein the memory is configured to store computer instructions, and when the communication apparatus runs, the processor executes the computer instructions stored in the memory, to perform the method according to any one of claims 1 to 6, or perform the method according to any one of claims 7 to 11.

26. A computer-readable storage medium, wherein the storage medium stores a computer program or instructions, and when the computer program or the instructions are executed by a communication apparatus, the method according to any one of claims 1 to 6 is implemented, or the method according to any one of claims 7 to 11 is implemented.

27. A communication system, comprising a first device configured to perform the method according to any one of claims 1 to 6, and a second device configured to perform the method according to any one of claims 7 to 11.

FIG. 1

FIG. 2

| Preamble code | | | | |
|---|---|---|---|---|
| symbol_1 (symbol_1) | symbol_2 (symbol_2) | symbol_3 (symbol_3) | ... | symbol_n (symbol_n) |

FIG. 3

FIG. 4

FIG. 5

| UWB MAC | SLP MAC | ··· |

Modem (modem)

RF

FIG. 6

| UWB MAC | SLP MAC | ··· |

| UWB modem | SLP modem | ··· |

RF

FIG. 7

| PMU | Wi-Fi SoC system | SLP SoC system |
| CMU | | |
| Always-on system | GNSS SoC system | UWB SoC system |

FIG. 8

FIG. 9

FIG. 10

```
                    ┌──────────────┐
         ┌─────────▶│ Host (host)  │◀─────────┐
         │          └──────────────┘          │
         │                                     │
         │                                     │
         ▼                                     ▼
   ┌──────────┐                         ┌──────────┐
   │   SLP    │                         │   UWB    │
   └──────────┘                         └──────────┘
         │                                     │
         ▼                                     ▼
   ┌─────────────────────────────────────────────────┐
   │                       RF                          │
   └─────────────────────────────────────────────────┘
```

FIG. 11

```
   SLP     ┌──────────┐            ┌──────────┐
   ───────▶│          │            │          │
           │   PTA    │───────────▶│    RF    │
   UWB     │          │            │          │
   ·······▶│          │            │          │
           └──────────┘            └──────────┘
```

FIG. 12

G node                                              T node

Broadcast packet

Scanning access request

Scanning access response

Establish an asynchronous unicast link

...

Data transmission

FIG. 13

G node                                              T node

Broadcast packet

Scanning access request

Scanning access response

Establish an asynchronous multicast link

...

Data transmission

FIG. 14

G node                                                    T node

Broadcast packet

Scanning access request

Scanning access response

Establish an asynchronous unicast link

Establish a synchronous unicast link

...

Data transmission

FIG. 15

G node                                                    T node

Broadcast packet

Scanning access request

Scanning access response

Establish an asynchronous unicast link

Establish a synchronous multicast link

...

Data transmission

FIG. 16

G node                                                T node

Broadcast packet

Scanning access request

Scanning access response

Establish an asynchronous unicast link

Perform synchronization by using a data
packet and a timestamp

...

Data transmission

FIG. 17

G node                                                T node

Broadcast packet

Scanning access request

Scanning access response

Establish an asynchronous multicast link

Perform synchronization by using a data
packet and a timestamp

...

Data transmission

FIG. 18

| Narrowband chip | Enabling signal → | Wideband chip |
|---|---|---|
| | Ranging control information → | |
| | Time synchronization signal → | |
| | Carrier frequency offset → | |
| | ← Measurement value information | |
| | ← Sleep/Wakeup signal → | |
| | Clock signal → | |

FIG. 19

Communication apparatus 500

Processing unit 510

Transceiver unit 520

FIG. 20

Communication apparatus 600

Processor 610

Interface circuit 620

Memory 630

FIG. 21

## INTERNATIONAL SEARCH REPORT

| International application No. |
|---|
| **PCT/CN2024/099074** |

### A. CLASSIFICATION OF SUBJECT MATTER

H04W 52/02(2009.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS: CNTXT; VEN; EPTXT; USTXT; WOTXT; CNKI; 3GPP: 超宽带, 宽带, 窄带, 同步, 粗同步, 精同步, 帧, 信标, 回复, 响应, 应答, 星闪, UWB, SLP, synchronization, frame, beacon, answer, response, poll, acknowledge, ACK

### C. DOCUMENTS CONSIDERED TO BE RELEVANT

| Category* | Citation of document, with indication, where appropriate, of the relevant passages | Relevant to claim No. |
|---|---|---|
| A | CN 106716888 A (QUALCOMM INC.) 24 May 2017 (2017-05-24) description, paragraphs [0034]-[0097] | 1-27 |
| A | CN 114554590 A (GUANGDONG OPPO MOBILE TELECOMMUNICATIONS CORP., LTD.) 27 May 2022 (2022-05-27) entire document | 1-27 |
| A | CN 101507192 A (PANASONIC CORP.) 12 August 2009 (2009-08-12) entire document | 1-27 |
| A | CN 108702653 A (HUAWEI TECHNOLOGIES CO., LTD.) 23 October 2018 (2018-10-23) entire document | 1-27 |
| A | US 2019357254 A1 (TELEFONAKTIEBOLAGET LM ERICSSON (PUBL)) 21 November 2019 (2019-11-21) entire document | 1-27 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 September 2024** | **14 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/099074**

| Patent document cited in search report | | | Publication date (day/month/year) | Patent family member(s) | | | Publication date (day/month/year) |
|---|---|---|---|---|---|---|---|
| CN | 106716888 | A | 24 May 2017 | JP | 2017535111 | A | 24 November 2017 |
| | | | | JP | 6568209 | B2 | 28 August 2019 |
| | | | | AU | 2015318364 | A1 | 02 March 2017 |
| | | | | AU | 2015318364 | B2 | 06 June 2019 |
| | | | | WO | 2016043929 | A1 | 24 March 2016 |
| | | | | EP | 3195546 | A1 | 26 July 2017 |
| | | | | KR | 20170056564 | A | 23 May 2017 |
| | | | | US | 2016087744 | A1 | 24 March 2016 |
| | | | | US | 10326546 | B2 | 18 June 2019 |
| | | | | BR | 112017005543 | A2 | 19 December 2017 |
| | | | | TW | 201616898 | A | 01 May 2016 |
| | | | | TWI | 654894 | B | 21 March 2019 |
| CN | 114554590 | A | 27 May 2022 | None | | | |
| CN | 101507192 | A | 12 August 2009 | JP | 2008259165 | A | 23 October 2008 |
| | | | | JP | 5190233 | B2 | 24 April 2013 |
| | | | | US | 2009262710 | A1 | 22 October 2009 |
| | | | | US | 8400959 | B2 | 19 March 2013 |
| CN | 108702653 | A | 23 October 2018 | US | 2019208514 | A1 | 04 July 2019 |
| | | | | US | 10743295 | B2 | 11 August 2020 |
| | | | | WO | 2018035801 | A1 | 01 March 2018 |
| | | | | WO | 2018035801 | A9 | 05 December 2019 |
| US | 2019357254 | A1 | 21 November 2019 | EP | 3542587 | A1 | 25 September 2019 |
| | | | | EP | 3542587 | A4 | 23 October 2019 |
| | | | | EP | 3542587 | B1 | 27 January 2021 |
| | | | | WO | 2018093305 | A1 | 24 May 2018 |
| | | | | US | 11153907 | B2 | 19 October 2021 |

Form PCT/ISA/210 (patent family annex) (July 2022)

**REFERENCES CITED IN THE DESCRIPTION**

**Patent documents cited in the description**

- CN 202310702619